# EUROPÄISCHE PATENTSCHRIFT

(11) **EP 0 548 718 B1**
(45) Veröffentlichungstag und Bekanntmachung des Hinweises auf die Patenterteilung: **15.11.1995**
(21) Anmeldenummer: 92121211.4
(22) Anmeldetag: 12.12.1992
(51) Int. Cl.: F16D 48/02

(54) **Kupplungsvorrichtung von Fahrzeugen**
Clutch device for vehicles
Dispositif d'embrayage pour véhicules

(30) Priorität: 22.12.1991 DE 4142744
(43) Veröffentlichungstag der Anmeldung: 30.06.1993
(73) Patentinhaber: HYDRAULIK-RING ANTRIEBS- UND STEUERUNGSTECHNIK GmbH, D-72622 Nürtingen (DE)
(72) Erfinder: Tischer, Dieter, W-7312 Kirchheim/Teck (DE); Niethammer, Bernd, W-7440 Nürtingen (DE); Trzmiel, Alfred, Dipl.-Ing., W-7441 Grafenberg (DE)
(74) Vertreter: Jackisch-Kohl, Anna-Katharina

(56) Entgegenhaltungen:
- DE-A- 3 736 584
- PATENT ABSTRACTS OF JAPAN vol. 8, no. 154 (M-310)18. Juli 1984, & JP-A-59 050 232 (FUJI JUKOGYO)
- PATENT ABSTRACTS OF JAPAN vol. 4, no. 176 (M-045)5. Dezember 1980, & JP-A-55 123 527 (KONDO SHIGEO) 24. September 1980
- PATENT ABSTRACTS OF JAPAN vol. 7, no. 261 (M-257)(1406) 19. November 1983, & JP-A-58 142 035 (NIPPON AIR BRAKE) 23. August 1983

## Beschreibung

Die Erfindung betrifft eine Kupplungsvorrichtung von Fahrzeugen nach dem Oberbegriff des Anspruches 1 bzw. 5.

Bei solchen Kupplungsvorrichtungen wird durch Niedertreten des Kupplungspedales über den Geberzylinder und den mit ihm leitungsverbundenen Nehmerzylinder die Kupplung hydraulisch getrennt. Beim Anfahren muß die Kupplungsvorrichtung das erforderliche Motordrehmoment bei Drehzahldifferenz zwischen der Kurbelwelle und der Getriebewelle übertragen. Dies erfolgt während des Schließvorganges der Kupplungsvorrichtung und verlangt vom Fahrer ein ausgewogenes Gefühl für die Betätigungsgeschwindigkeit der Kupplungsvorrichtung in Abhängigkeit vom eingelegten Gang sowie der Gaspedalstellung, aus der das Motordrehmoment resultiert.

Es kommt vor, daß der Fuß versehentlich vom Kupplungspedal abrutscht, so daß es schlagartig freigegeben wird. Dann schließt die Kupplung mit der höchstmöglichen Schließgeschwindigkeit. Hierbei kommt es zu Beschädigungen in Teilen des Triebstranges und an den Reifen, da die hierbei auftretenden Drehmomentspitzen ein Mehrfaches des Motornennmomentes betragen können.

Bei der bekannten Kupplungsvorrichtung (DE-OS 37 36 584) ist in der Leitungsverbindung vom Geberzylinder zum Nehmerzylinder eine Sicherheitseinrichtung in Form eines Verschlußkörpers angeordnet. Er weist Axialnuten am Umfang auf, über die das Fluid beim Betätigen des Kupplungspedales strömen kann. Außerdem wird der Verschlußkörper von einer Bohrung axial durchsetzt, welche eine Drosselstelle bildet. Bei unerwünscht hohen Einkuppelgeschwindigkeiten staut sich das Fluid an der Stirnseite des Verschlußkörpers und drückt ihn gegen die Kraft einer Feder in eine Schließstellung, in der er mit seiner Stirnseite an der Gehäusewand anliegt. Dadurch sind die Axialnuten geschlossen, so daß das Fluid beim Zurückströmen vom Nehmerzylinder zum Geberzylinder nur durch die Drosselstelle gelangen kann. Dadurch wird die Flußgeschwindigkeit herabgesetzt und der Einkuppelvorgang in seiner Geschwindigkeit begrenzt. Der Verschlußkörper wird durch die Schraubendruckfeder in seiner Offenstellung gehalten. Diese Schraubendruckfeder hat eine steigende Kraft-Weg-Kennlinie. Dies hat zur Folge, daß der Verschlußkörper beim Auftreten des Staudruckes nicht schlagartig, sondern allmählich - entsprechend der Steigung der Kennlinie - in Richtung auf seine Schließlage verschoben wird. Dadurch findet lediglich eine allmähliche Drosselung des Fluids statt.

Es ist eine weitere Kupplungsvorrichtung bekannt (DE-GM 17 85 882), bei der das Fluid während der Ein- und Auskuppelphase der Kupplung stets gedrosselt vom Geber- zum Nehmerzylinder und zurück strömen kann. Strömt das Hydraulikmedium vom Nehmerzylinder zurück, dann wird zunächst eine Drosselscheibe am Zylinderboden zur Anlage gebracht. Dies hat zur Folge, daß das Hydraulikmedium nur noch durch die Drosselstelle der Drosselscheibe in die Zuleitung zum Geberzylinder strömen kann. Diese Drosselwirkung tritt immer auf, wenn das Kupplungspedal freigegeben wird.

Der Erfindung liegt die Aufgabe zugrunde, die gattungsgemäße Kupplungsvorrichtung so auszubilden, daß bei einem schlagartigen Freigeben des Kupplungspedals der Hauptstromweg über das Fluid vom Nehmer- zum Geberzylinder schlagartig geschlossen wird.

Diese Aufgabe wird bei der gattungsgemäßen Kupplungsvorrichtung erfindungsgemäß mit den kennzeichnenden Merkmalen des Anspruches 1 bzw. 5 gelöst.

Bei der erfindungsgemäßen Kupplungsvorrichtung gem. Anspruch 1 greifen die beiden Druckschalter den Druck vor und hinter der Meßblende ab. Der Differenzdruck ist für die Fließgeschwindigkeit des Fluids kennzeichnend. Wird das Kupplungspedal schlagartig freigegeben, wird die Grenzgeschwindigkeit der Fluidkennlinie überschritten. Der Kolben des Geberzylinders wird dadurch sehr rasch zurückgeführt. Im Geberzylinder entsteht ein Unterdruck, der sich sofort auch an der Meßblende bemerkbar macht. Sobald der vorgegebene Differenzdruck überschritten ist, wird das Magnetventil betätigt, das augenblicklich den Verschlußkörper in seine Schließstellung verstellt. Dadurch wird der Hauptstromweg für das Fluid vom Nehmer- zum Geberzylinder unterbrochen, so daß das Fluid nur noch durch die Drosselstelle strömen kann. Dadurch strömt das Fluid trotz der fehlenden Gegenkraft durch das Kupplungspedal nur verzögert in den Geberzylinder, so daß auch bei freigegebenen Kupplungspedal die Kupplung ordnungsgemäß geschlossen wird.

Bei der Kupplungsvorrichtung gem. Anspruch 5 wird der Verschlußkörper durch die Tellerfeder in seiner die Meßblende offen haltenden Stellung gehalten. Bei normaler Betätigung des Kupplungspedals kann dadurch das Fluid rasch vom Nehmerzylinder zum Geberzylinder strömen. Wird das Kupplungspedal schlagartig freigegeben, dann wird das Druckgefälle über dem Querschnitt der Drosselstelle so groß, daß durch einen entsprechenden Druckabfall auf der Seite der Tellerfeder die Kraft auf der gegenüberliegenden Seite des Verschlußkörpers überwiegt. Dadurch kann der Verschlußkörper mit hoher Schaltgeschwindigkeit gegen die Kraft der Tellerfeder verschoben werden, so daß er den Hauptstromweg für das Fluid schlagartig sperrt. Es kann dadurch nur noch über die Drosselstelle vom Nehmerzylinder zum Geberzylinder strömen. Der rasche Schließvorgang wird dadurch erreicht, daß die Tellerfeder so eingestellt ist, daß ihr Arbeitsbereich im abfallenden Teil ihrer Kraft-Weg-Kennlinie liegt. Durch die besondere Auslegung der Tellerfeder kann die Kupplungseinrichtung somit so eingestellt werden, daß der Verschlußkörper schlagartig in seine Schließstellung verschoben wird.

Weitere Merkmale der Erfindung ergeben sich aus den weiteren Ansprüchen, der Beschreibung und den Zeichnungen.

Die Erfindung wird anhand zweier in den Zeichnungen dargestellter Ausführungsformen näher erläutert.

Es zeigen
- Fig. 1: im Schnitt eine herkömmliche fluidbetätigte Reibungskupplung,
- Fig. 2: ein Druck-Weg-Diagramm, das sich bei Betätigen der Kupplung gemäß Fig. 1 ergibt,
- Fig. 3: ein Druck-Zeit-Diagramm, das sich bei Betätigen der Kupplung gemäß Fig. 1 ergibt,
- Fig. 4: in einem Schnitt eine erfindungsgemäße Sicherheitseinrichtung, die in die fluidbetätigte Kupplung gemäß Fig. 1 eingebaut wird,
- Fig. 5: in einem Schnitt eine zweite Ausführungsform einer erfindungsgemäßen Sicherheitseinrichtung,
- Fig. 6: ein Kraft-Weg-Diagramm einer Tellerfeder,
- Fig. 7: ein Druck-Zeit-Diagramm einer mit der erfindungsgemäßen Sicherheitseinrichtung versehenen Kupplung,
- Fig. 8: ein Hydraulikschaltbild der erfindungsgemäßen Sicherheitseinrichtung gemäß Fig. 4,
- Fig. 9: einen elektrischen Schaltplan der erfindungsgemäßen Sicherheitseinrichtung gemäß Fig. 4.

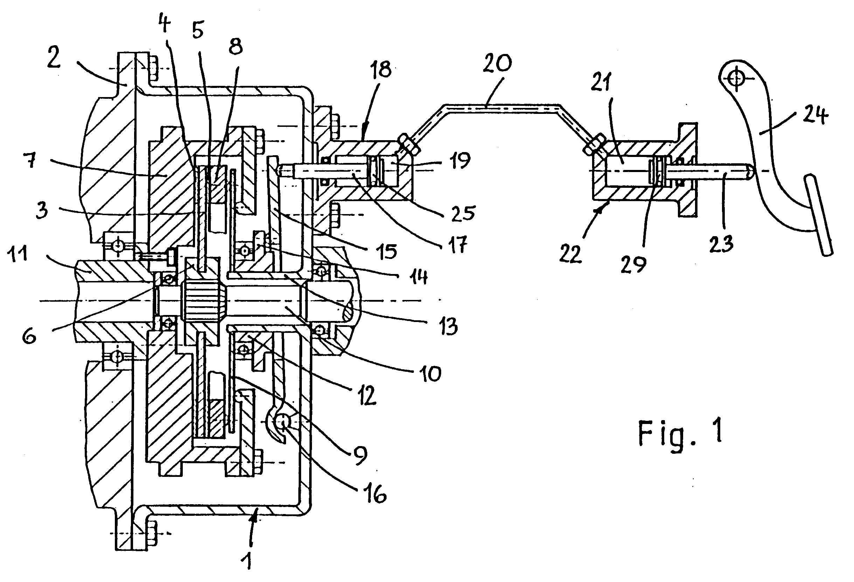

Fig. 1 zeigt eine herkömmliche fluidbetätigte Kupplungsvorrichtung. In einem Kupplungsgehäuse 1, das an einen Motorblock 2 angeflanscht ist, befindet sich eine Mitnehmerscheibe 3, die am äußeren Rand auf beiden Seiten jeweils einen ringförmigen Reibbelag 4 und 5 aufweist. Die Mitnehmerscheibe 3 sitzt auf einer Buchse 6 und liegt zwischen einem Massenschwungrad 7 und einer Andruckscheibe 8. Eine Tellerfeder 9 drückt die Andruckscheibe 8, das Massenschwungrad 7 und die Mitnehmerscheibe 3 zusammen, wodurch die Kraftübertragung über die Kupplung von der Getriebewelle 10 zur Kurbelwelle 11 geschlossen ist. Durch ein hydraulisch-mechanisch betätigtes Ausrücklager 12, das axial verschiebbar auf einer Führung 13 des Kupplungsgehäuses 1 sitzt, kann die Andruckscheibe 8 von der Tellerfeder 9 entlastet werden, um z.B. für einen Schaltvorgang die Kupplung zu öffnen. Das Ausrücklager 12 hat einen radial nach außen gerichteten Flansch 14, an dem zum Axialverschieben des Ausrücklagers 12 ein einarmiger Hebel 15 angreifen kann. Er ist um eine Achse 16 schwenkbar im Kupplungsgehäuse 1 gelagert. An dem der Schwenkachse 16 gegeenüberliegenden Ende greift am Hebel 15 eine Kolbenstange 17 eines Nehmerzylinders 18 an, dessen Druckraum 19 über eine Leitung 20 mit einem Druckraum 21 eines Geberzylinders 22 verbunden ist. Seine Kolbenstange 22 ragt aus dem Zylindergehäuse und liegt an einem Kupplungspedal 24 des Fahrzeuges an.

Fig. 1 zeigt die Lage bei nicht getretenem Kupplungspedal 24, d.h. die Kupplung ist geschlossen. Um z.B. für einen Schaltvorgang die Kupplung zu öffnen, wird das Kupplungspedal 24 gedrückt. Dadurch wird die Kolbenstange 23 in den Geberzylinder 22 verschoben, wodurch das im Druckraum befindliche Hydraulikmedium über die Leitung 20 in den Druckraum 19 des am Kupplungsgehäuse 1 vorgesehenen Nehmerzylinders 18 strömt, dessen auf der Kolbenstange 17 sitzender Kolben 25 dadurch in das Kupplungsgehäuse 1 geschoben wird. Der Hebel 15 schwenkt dadurch im Gegenuhrzeigersinn und verschiebt das buchsenförmige Ausrücklager 12. Dadurch wird die Andruckscheibe 8 in bekannter Weise von der Tellerfeder 9 entlastet, so daß die Kupplung geöffnet und damit die Antriebsverbindung zwischen der Kurbelwelle 11 und der Getriebewelle 10 unterbrochen ist.

Während des Anfahrens schleift die Kupplung und überbrückt die Drehzahldifferenz zwischen der Kurbelwelle 11 und der Getriebewelle 10. Die Kupplung muß darum das erforderliche Motor-Drehmoment bei dieser Drehzahldifferenz mit Schlupf übertragen. Dies erfolgt während des Schließvorganges der Kupplung und verlangt vom Fahrer ein ausgewogenes Gefühl für die Betätigungsgeschwindigkeit der Kupplung in Abhängigkeit vom eingelegten Gang sowie der Gaspedalstellung, aus der das Motor-Drehmoment resultiert.

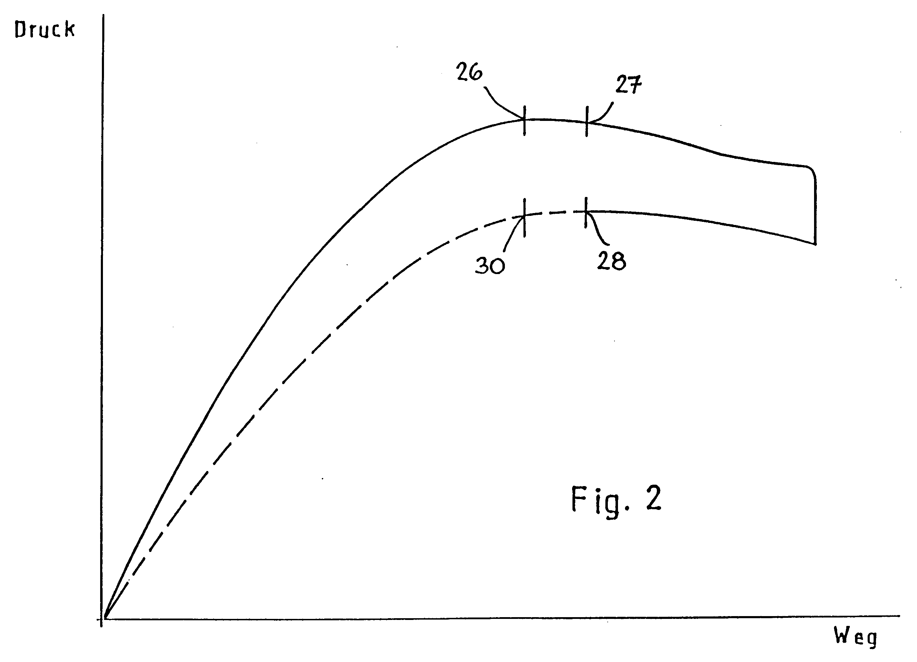

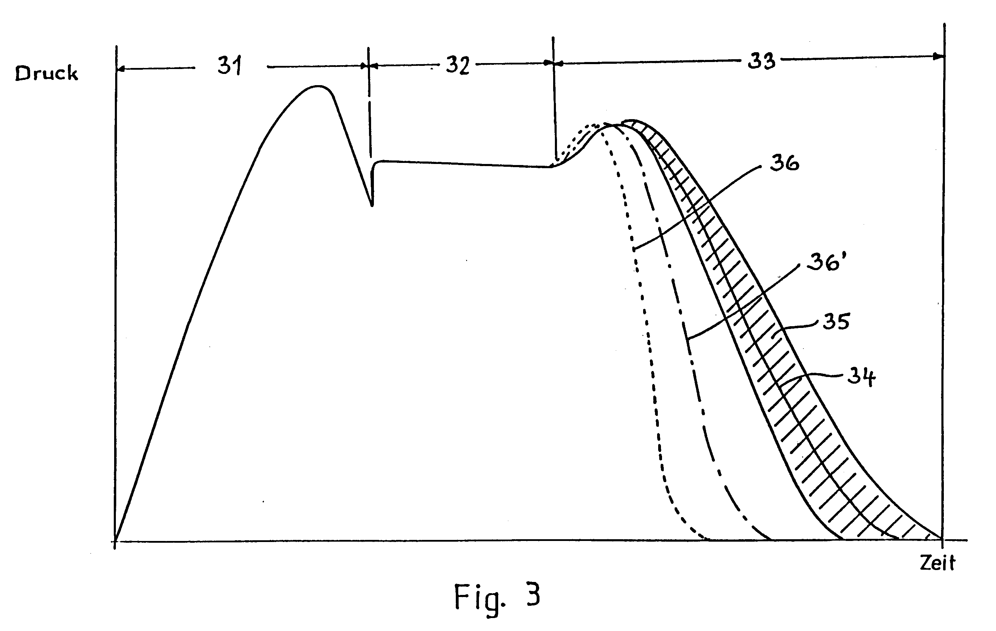

Rutscht der Fahrer versehentlich vom Kupplungspedal 24 ab oder gibt er das Kupplungspedal 24 bewußt sehr schnell frei, dann tritt die höchstmögliche Schließgeschwindigkeit der Kupplung auf. Es hat sich gezeigt, daß dies zu Beschädigungen in den einzelnen Teilen des Triebstranges des Fahrzeuges und an den Reifen führt, da die hierbei auftretenden Drehmomentspitzen ein Mehrfaches vom Motornennmoment betragen können. Dies soll anhand der Fig. 2 und 3 kurz erläutert werden.

Wird das Kupplungspedal 24 zum Öffnen der Kupplung getreten, dann nimmt der Druck, wie Fig. 2 anhand der ausgezogenen Linie zeigt, zunächst sehr rasch zu und bleibt dann annähernd konstant. Am Punkt 26 beginnt die Trennung der Kupplung, d.h. hier wird die Andruckscheibe 8 in der beschriebenen Weise vom Druck der Tellerfeder 9 entlastet. Nach verhältnismäßig kurzer Zeit ist dann die Kupplung am Punkt 27 vollständig getrennt, wobei der Druck im Hydrauliksystem bereits wieder gefallen ist. Nach dem Schaltvorgang nimmt der Druck im Hydrauliksystem weiter ab. Wird nun das Kupplungspedal 24 allmählich losgelassen, steigt der Druck zunächst wieder an. Am Punkt 28 beginnt die Kupplung wieder zu schließen, d.h. der Hebel 15 schwenkt unter dem Druck der sich wieder spannenden Tellerfeder 9 im Uhrzeigersinn um die Achse 16 und drückt dadurch die Kolbenstange 17 des Nehmerzylinders 18 zurück. Dadurch wird das Hydraulikmedium über die Leitung 20 in den Druckraum 21 des Geberzylinders 22 gedrückt, wodurch der Kolben 29 und damit die Kolbenstange 23 zurückgeschoben wird. Das Kupplungspedal 24 schwenkt somit wieder in Richtung auf seine Ausgangsstellung. Bis die Kupplung vollständig geschlossen ist, nimmt der Druck im Hydrauliksystem noch zu, wie die strichpunktierte Linie in Fig. 2 zeigt. Am Punkt 30 ist die Kupplung wiederum vollständig geschlossen, so daß die Antriebsverbindung zwischen der Kurbelwelle 11 und der Getriebewelle 10 hergestellt ist. Nunmehr nimmt der Druck allmählich ab, bis das Kupplungspedal 24 wieder seine Ausgangsstellung erreicht hat (Fig. 1).

Die Druck-Weg-Kennlinie der fluidbetätigten Kupplung wird durch die Auslegung der Tellerfeder 9 vorgegeben. Entsprechend dem Verschleißzustand wandert der Kupplungspunkt 28 bzw. der Trennpunkt 27 auf der Kennlinie nach rechts. Da aber in diesem Bereich die Kennlinie annähernd waagerecht verläuft, bleibt die Betätigungskraft über dem Weg nahezu konstant.

In Fig. 3 ist die Abhängigkeit des Druckes von der Zeit beim Kupplungsvorgang dargestellt. Wird das Kupplungspedal 24 getreten (Schaltbereich 31), dann nimmt der Druck zunächst rasch zu und nimmt kurz vor Erreichen der vollständigen Kupplungstrennung (Schaltpunkt 27 in Fig. 2) wieder ab. Im Öffnungsbereich 32, in dem die Kupplung geöffnet ist und in dem der Schaltvorgang stattfindet, bleibt der Druck annähernd konstant. Ist der Schaltvorgang abgeschlossen, wird das Kupplungspedal 24 allmählich freigegeben. Bei normalem Freigeben des Kupplungspedals 24 ergibt sich im Schaltbereich 33 der Kurvenverlauf 34, d.h. der Druck nimmt über die Zeit allmählich ab. Diese Kurve 34 liegt in einem durch Schraffurlinien gekennzeichneten Bereich 35, innerhalb dem die Kupplung die normale Schließgeschwindigkeit zeigt. In diesem Bereich treten keine übermäßigen Drehmomentspitzen auf, so daß Beschädigungen an Teilen des Triebstranges nicht zu befürchten sind.

Wird das Kupplungspedal 24 jedoch schlagartig freigegeben, beispielsweise weil der Fuß vom Kupplungspedal 24 abrutscht, dann ergibt sich ein Kurvenverlauf 36 (gestrichtelte Linie in Fig. 3), d.h der Druck im System nimmt innerhalb der geringstmöglichen Zeit ab. In diesem Bereich wird somit die größtmögliche Schließgeschwindigkeit erreicht. Dabei treten die beschriebenen Drehmomentspitzen auf, die ein Mehrfaches des Motornennmomentes betragen können. In einem solchen Fall werden Teile des Triebstranges beschädigt. Die hohe Schließgeschwindigkeit kommt dadurch zustande, daß in diesem Falle die Gegenkraft durch die Betätigungseinrichtung (Kupplungspedal 24) entfällt und dadurch die Kupplung in der kürzestmöglichen Zeit schließt.

Entsprechend der jeweiligen Kupplungsgeschwindigkeit werden in der Leitung 20 zwischen dem Geberzylinder 22 und dem Nehmerzylinder 18 unterschiedliche Volumina pro Zeiteinheit bewegt. Der größte Volumenstrom wird bei der höchsten Geschwindigkeit erreicht, also in dem Fall, in dem das Kupplungspedal 24 schlagartig freigegeben wird.

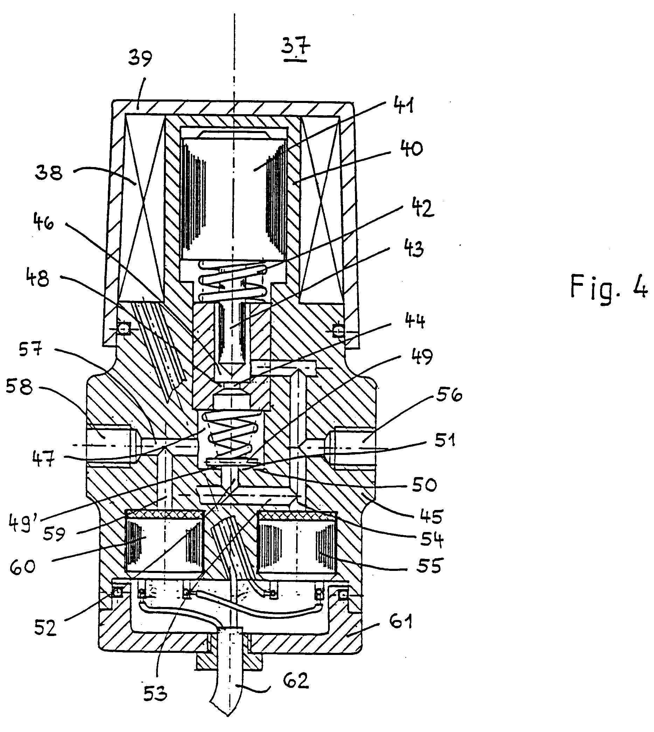

Um in diesem Falle ein schlagartiges Schließen der Kupplung zu verhindern, ist die in Fig. 4 dargestellte Sicherheitseinrichtung 37 vorgesehen. Mit ihr wird die Kupplungsgeschwindigkeit erfaßt und der Fluidstrom zwischen dem Nehmerzylinder 18 und dem Geberzylinder 22 so gedrosselt, daß der Druckabfall innerhalb des Bereiches 35 (Fig. 3) der Druck-Zeit-Kennlinie liegt. Dadurch ist sichergestellt, daß Triebstrangteile nicht beschädigt werden, selbst wenn der Fuß versehentlich vom Kupplungspedal 24 abrutschen sollte. Die Sicherheitseinrichtung ist so ausgebildet, daß die normalen Bedienungsabläufe beim Kuppeln, wie schnelles, sportliches Kuppeln und Schalten, nicht beeinflußt werden. Die Sicherheitseinrichtung wird erst dann tätig, wenn der beschriebene starke Druckabfall auftritt.

Die Sicherheitseinrichtung 37 ist im Bereich zwischen dem Nehmerzylinder 18 und dem Geberzylinder 22 in die Leitung 20 eingebaut. Sie hat eine Magnetspule 38, die von einer Abdeckkappe 39 umgeben ist. Die Magnetspule 38 umgibt ein Polkernrohr 40, in dem ein Magnetanker 41 axial verschiebbar angeordnet ist. Er ist gegen die Kraft einer Druckfeder 42 bei Stormbeaufschlagung der Magnetspule 38 verschiebbar. Die Druckfeder 42 umgibt einen fest mit dem Magnetanker 41 verbundenen Stößel 43, dessen freies Ende kegelförmig ausgebildet ist und der mit einer Durchlaßbohrung 44 zusammenwirkt, die in einem Grundkörper 45 der Sicherheitseinrichtung vorgesehen ist. Die Durchlaßbohrung 44 verbindet zwei Fluidräume 46 und 47 miteinander. In den Fluidraum 46 ragt der Stößel 43, während im Fluidraum 47 eine Druckfeder 48 untergebracht ist, mit der eine Rückschlagventilplatte 49 in ihre Schließstellung gedrückt wird. Der vom Fluidraum 46 abgewandte Boden 50 des Fluidraumes 47 hat eine zentrische Erhöhung 51, auf der die Rückschlagventilplatte 49 aufliegt. Die Erhöhung 51 wird von einer Bohrung 52 durchsetzt, die durch die Ventilplatte 49 geschlossen gehalten wird.

Die Durchlaßbohrung 44 hat kleineren Querschnitt als die beiden Fluidräume 46 und 47. Die Bohrung 52, die ebenso wie die Fluidräume 46, 47 zentrisch im Grundkörper 45 angeordnet ist, ist über eine Querbohrung 53 mit einer parallelen Bohrung 54 verbunden. Sie verbindet den Fluidraum 46 mit einem Niederdruckschalter 55, der im Grundkörper 45 der Sicherheitseinrichtung 37 untergebracht ist. Die Bohrung 54 ist mit einem Anschluß 56 für den Geberzylinder 22 verbunden.

Der Fluidraum 47 ist über eine Querbohrung 57 im Grundkörper 45 mit einem Anschluß 58 für den Nehmerzylinder 18 verbunden. Die Querbohrung 57 ist über eine Längsbohrung 59 mit einem im Grundkörper 45 angeordneten Hochdruckschalter 60 verbunden.

Am Grundkörper 45 ist am einen Ende die Abdeckkappe 39 und am gegenüberliegenden Ende ein Deckel 61 befestigt, durch den ein Elektroanschlußkabel 62 für die Druckschalter 55 und 60 sowie für die Magnetspule 38 zentral geführt ist.

Bei normaler Betätigung des Kupplungspedals 24 strömt das Hydraulikmedium aus dem Geberzylinder 22 und dem Anschluß 56 der Sicherheitseinrichtung 37 in die Bohrung 54. Von dort strömt es über die Querbohrung 53 und die Bohrung 52 in den Fluidraum 47. Die Rückschlagventilplatte 49 wird unter dem Druck des Hydraulikmediums von ihrem Sitz 51 gegen die Kraft der Druckfeder 48 abgehoben. Somit kann das Hydraulikmedium ungehindert über die Querbohrung 57 zum Anschluß 58 des Nehmerzylinders 18 störmen. Die Rückschlagventilplatte 49 und die Erhöhung 51 bilden ein Rückschlagventil, welches das Hydraulikmedium zum schnellen Trennen der Kupplung ungehindert vom Anschluß 56 zum Anschluß 58 strömen läßt.

Das Hydraulikmedium kann vom Anschluß 56 aus auch über die Bohrung 54 in den Fluidraum 46 und von dort durch die Durchlaßbohrung 44 in den Fluidraum 47 strömen. Der Magnetanker 41 liegt unter der Kraft der Rückstellfeder 42 in seiner in Fig. 4 dargestellten anschlagbegrenzten Endlage, in der der Stößel 43 Abstand von der Eintrittsöffnung der Durchlaßbohrung 44 hat. Dieser Teil der Sicherheitseinrichtung 37 bildet eine Meßblende, die so dimensoniert ist, daß die Kuppelgeschwindigkeit im normalen Betriebskennlinienfeld 35 (Fig. 3) nicht reduziert wird.

Wird das Kupplungspedal 24 ordnungsgemäß freigegeben, strömt das Hydraulikmedium in umgekehrter Richtung vom Anschluß 58 über die Querbohrung 57 in den Fluidraum 47. Von dort gelangt es über die Durchlaßbohrung 44 in den Fluidraum 46, von dem es über die Bohrung 54 zum Anschluß 56 strömt. Die Rückschlagventilplatte 49 wird hierbei, unterstützt von der Kraft der Druckfeder 48, in ihre in Fig. 4 dargestellte Schließstellung bewegt.

Wird nun das Kupplungspedal 24 beispielsweise unbeabsichtigt schlagartig freigegeben, dann wird durch die Sicherheitseinrichtung ein rasches Einkuppeln verhindert. Bei diesem raschen Einkuppeln würde ohne Einsatz der Sicherheitseinrichtung 37 die Grenzgeschwindigkeit des Fluidstrom überschritten, die durch die Linie 36' des Druck-Zeit-Diagramms gekennzeichnet ist. Die Sicherheitseinrichtung 37 ist so ausgebildet, daß aus der Geschwindigkeit des Hydraulikstroms Signale abgeleitet werden. Hierzu dienen die Druckschalter 55 und 60, deren konstruktive Ausbildung an sich bekannt ist. Sie sind in Strömungsrichtung des Hydraulikmediums vor und hinter der Meßblende 44 angeordnet und greifen über diese Meßblende den Differenzdruck des Hydraulikmediums ab, der für die Fließgeschwindigkeit kennzeichnend ist. Wie schon erläutert, ist diese Meßblende 44 so dimensoniert, daß die Kuppelgeschwindigkeit bei ordnungsgemäßer Betätigung des Kupplungspedales 24 nicht verringert wird. Die Drücke vor und hinter der Meßblende 44 werden über die Druckschalter 55, 60 abgegriffen. Der Druckschalter 60 wirkt als Schließer und der Druckschalter 55 als Öffner. Die elektrisch in Reihe geschalteten Druckschalter 55, 60 steuern das Magnetventil 38, 41, 43, mit dem die Leitung 20 zwischen dem Geberzylinder 22 und dem Nehmerzylinder 18 hinter der Meßblende 44 getrennt werden kann.

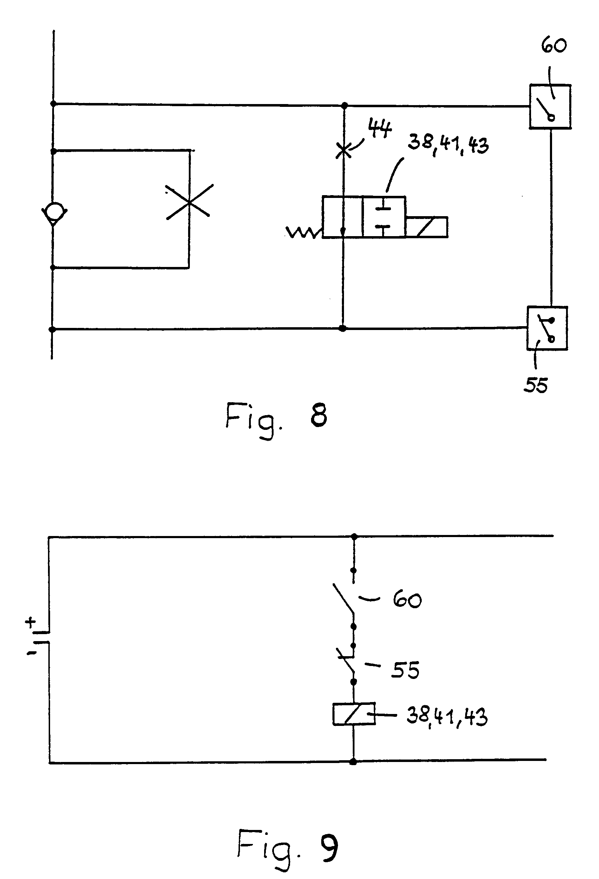

Bei geöffneter Kupplung liegt vor und hinter der Meßblende 44 der gleiche hohe Druck an, der im Ausführungsbeispiel höher als 18 bar liegt. Wird die Kupplung kontrolliert geschlossen, wird die Grenzgeschwindigkeit (Linie 36' im Druck-Zeit-Diagramm gemäß Fig. 3) nicht erreicht. Der Systemdruck ergibt sich aus der Weg-Kraft-Kennlinie der Rückstellfelder 9 der Kupplung. Der Systemdruck sinkt während des Einkupplungsvorganges entsprechend ab (Fig. 2 und 3). Infolge der weitgehenden Druckgleichheit vor und hinter der Meßblende 44 bleibt das Betätigungsgefühl, das der Fahrer beim Drücken und Freigeben des Kupplungspedals 24 hat, weitestgehend erhalten. Infolge der Druckgleichheit bleibt auch der elektrische Strompfad über die Kontakte der beiden Druckschalter 55, 60 aufgetrennt, d.h. das Magnetventil 38, 41, 43 bleibt in der in Fig. 4 dargestellten Durchflußstellung, in der der Stößel 43 die Durchlaßbohrung 44 nicht verschließt. Die beiden Schalter 55 und 60 sind so angeordnet und ausgebildet, daß der Hochdruckschalter 60 bei einem Systemdruck von beispielsweise mehr als 18 bar geschlossen ist, während der Niederdruckschalter 55 bei diesem Druck geöffnet ist. Da diese beiden Schalter 55 und 60 hintereinander im Stromkreis zum Magnetventil 38, 41, 43 liegen (Fig. 9 ), ist infolge des geöffneten Schalters 55 der Stromweg zum Magnetventil geöffnet. Das Magnetventil nimmt darum seine Durchlaßstellung ein, d.h. die Meßblende 44 ist offen. Das Hydraulikmedium kann dadurch ungehindert durch die geöffnete Meßblende 44 strömen.

Wird das Kupplungspedal 24 in der beschriebenen Weise versehentlich schlagartig freigegeben, wird die Grenzgeschwindigkeit (Linie 36' des Druck-Zeit-Diagramms gemäß Fig. 3) der Fluidkennlinie überschritten. Das Kupplungspedal 24 kehrt, unterstützt durch die Kraft der Rückholfeder, schnell in seine Ausgangslage zurück, wobei auch der Kolben 29 des Geberzylinders 22 schnell zurückgeführt wird. Dadurch entsteht im Geberzylinder 22 ein Unterdruck, so daß der Druck im Geberzylinder sehr rasch abfällt. Dies hat zur Folge, daß der Schwellwertdruck des Niederdruckschalters 55 unterschritten wird, der im Ausführungsbeispiel beispielsweise 14 bar beträgt. In diesem Augenblick wird dieser Niederdruckschalter 55 geschlossen. Da der Hochdruckschalter 60 bereits geschlossen ist (der hohe Druck bleibt bei diesem schlagartigen Freigeben des Kupplungspedals aufrechterhalten), ist nunmehr durch die beiden geschlossenen Schalter 55 und 60 der Strompfad zum Magnetventil 38, 41, 43 geschlossen (Fig. 9 ). Es wird dadurch betätigt und verschiebt den Anker 41 gegen die Kraft der Rückstellfeder 42, wodurch die Meßblende 44 durch den Stößel 43 geschlossen wird.

Das Rückschlagventil 49, 51 bildet eine Drosselblende, durch die das Hydraulikmedium nunmehr strömen muß. Die Stirnseite der Erhöhung 51 und/oder die Auflageseite der Rückschlagventilplatte 49 ist mit einer Vertiefung oder Erhöhung 49' versehen, wodurch ein Durchlaß für das Hydraulikmedium auch bei auf der Erhöhung 51 aufliegender Rückschlagventilplatte 49 gebildet wird. Die Rückschlagventilplatte 49 kann auch mit einer sie durchsetzenden Bohrung versehen sein. Das vom Nehmerzylinder 18 ausgestoßene Hydraulikmedium fließt nun über die Querbohrung 57 in den Fluidraum 47 und von dort durch die bebeschriebene Drosselstelle zwischen der Rückschlagventilplatte 49 und der Erhöhung 51 in die Bohrung 52. Von dort strömt das Hydraulikmedium über die Querbohrung 53 und die Bohrung 54 zum Anschluß 56 des Geberzylinders 22. Die Drosselstelle 49, 51 hat eine solche Dimensionierung, daß bei einem Schließvorgang der Kupplung, bei dem das Kupplungspedal 24 freigegeben wird und darum keine Rückstellkraft wirkt, die vorgegebene Grenzgeschwindigkeit (Linie 36' des Druck-Zeit-Diagrammes gemäß Fig. 3) nicht überschritten wird. Die Schließgeschwindigkeit bewegt sich im Bereich 35 des Druck-Zeit-Diagrammes gemäß Fig. 3, so daß Drehmomentspitzen nicht auftreten und darum eine Beschädigung von Teilen des Triebstranges nicht zu befürchten ist. Infolge der Drosselstelle 49, 51 kann das Hydraulikmedium trotz der fehlenden Gegenkraft durch das Kupplungspedal 24 nur verzögert in den Geberzylinder 22 strömen, so daß auch bei freigegebenem Kupplungspedal 24 die Kupplung ordnungsgemäß geschlossen wird. Der Druck im Nehmerzylinder 18 wird kontinuierlich und langsam abgebaut, bis der Schwellwert des Hochdruckschalters 60, im Ausführungsbeispiel 18 bar, erreicht ist. Sobald dieser Wert unterschritten wird, öffnet dieser Hochdruckschalter 60 und unterbricht somit die Stromverbindung zum Magnetventil 38, 41, 43. Der Magnetanker 41 wird dann durch die Kraft der Rückstellfeder 42 in seine Ausgangslage zurückgestellt, wodurch die Meßblende 44 wieder geöffnet wird. Das Hydraulikmedium kann darum vom Nehmerzylinder 18 nunmehr auch wieder ungehindert über die Meßblende 44 zum Geberzylinder 22 strömen.

Diese Abschaltung des Magnetventils 38, 41, 43 erfolgt vorteilhaft noch vor dem vollständigen Schließen der Kupplung, so daß der restliche Weg der Kupplung mit ungedrosselter Geschwindigkeit durchlaufen wird.

Mit der beschriebenen Sicherheitseinrichtung 37 wird zuverlässig verhindert, daß bei plötzlichem Freigeben des Kupplungspedals 24 die Kupplung schlagartig geschlossen wird. Tritt dieser Fall ein, dann wird über die Druckschalter 55, 60 die Durchlaßbohrung 44 sofort geschlossen, so daß das Hydraulikmedium nur über die Drosselstelle 49, 51 vom Anschluß 58 zum Anschuß 56 strömen kann. Dadurch schließt die Kupplung mit der gewünschten kleinen Geschwindigkeit. Solange der Fahrer das Kupplungspedal 24 ordnungsgemäß betätigt, tritt die Sicherheitseinrichtung 37 nicht in Kraft, da die Druckdifferenz vor und hinter der Durchlaßbohrung 44 (Meßblende) annähernd gleich ist und so das Druckgefälle nicht größer ist als die Druckdifferenz der Einstellwerte der beiden Druckschalter 55, 60.

Die Sicherheitseinrichtung arbeitet in der beschriebenen Weise mit drei Geschwindigkeiten beim Kuppeln mit freigegebenem Kupplungspedal 24. Die erste Geschwindigkeit wird über die Meßblende 44 bei vollem Druckgefälle infolge voll gespannter Tellerfeder 9 bei voll geöffneter Kupplung bestimmt. Im Bereich des Einkupplungsvorganges wird die zweite Geschwindigkeit durch die Drosselstelle 49, 51 bestimmt. Die dritte Geschwindigkeit schließlich wird durch das sich stetig verringernde Druckgefälle über der Meßblende 44 infolge der sich entspannenden Tellerfeder 9 bestimmt, nachdem das Druckgefälle über der Meßblende 44 einen vorgegebenen Schwellwert unterschreitet und dadurch das kupplungstechnische Gefühl beim Betätigen des Kupplungspedals 24 erhalten bleibt.

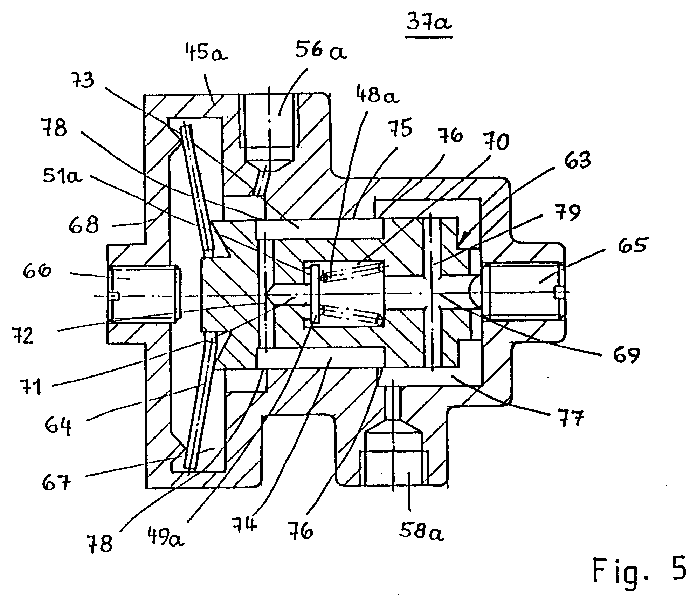

Fig. 5 zeigt eine zweite Ausführungsform einer Sicherheitseinrichtung 37a, die beim Kuppeln im Bereich unzulässiger Geschwindigkeiten nur mit zwei Geschwindigkeiten arbeitet. Diese Ausführungsform ist so ausgebildet, daß sie ohne Verwendung und Einbau von Elektrobauteilen den Hydraulikstrom beeinflußt. Bei dieser Ausführungsform fehlen die Druckschalter 55, 60.

Die Sicherheitseinrichtung 37a hat den Grundkörper 45a, der den Anschluß 56a für den Geberzylinder 22 und den Anschluß 58a für den Nehmerzylinder 18 aufweist. Im Grundkörper 45a ist ein Schaltkolben 63 axial verschiebbar. Er steht unter der Kraft einer Tellerfeder 64, die ihn in die in Fig. 5 dargestellte Ausgangslage drückt, in welcher der Schaltkolben 63 an einer Justierschraube 65 anliegt, die in den Grundkörper 45a geschraubt ist. Am gegenüberliegenden Ende ist der Grundkörper 45a mit einer zweiten Justierschraube 66 versehen. Mit den beiden Justierschrauben 65, 66 kann die axiale Lage des Schaltkolbens 63 exakt festgelegt werden.

Der Anschluß 56a mündet in eine Fluidkammer 67, in der auch die Tellerfeder 64 angeordnet ist, die sich am Boden 68 der Fluidkammer abstützt. Der Schaltkolben 63 ist mit einer zentralen Bohrung 69 versehen, die in die der Justierschraube 65 zugewandte Stirnseite des Schaltkolbens mündet. Die Bohrung 69 erstreckt sich bis in einen Fluidraum 70, der durch eine im Querschnitt kleine Längsbohrung 71 mit einer Diametralbohrung 72 verbunden ist, die zwei diametral einander gegenüberliegende Längsnuten 73 und 74 des Schaltkolbens miteinander verbindet. Diese Längsnuten 73, 74 werden außenseitig von der Innenwandung 75a begrenzt.

In der Ausgangsstellung des Schaltkolbens 63 gemäß Fig. 5 sind die Längsnuten 73, 74 über einen Drosselquerschnitt 76 mit einem Fluidraum 77 verbunden, in den der Anschluß 58a des Nehmerzylinders 18 mündet. Am anderen Ende sind die Längsnuten 73, 74 über eine Durchströmöffnung 78 mit der Fluidkammer 67 verbunden. Die Längsbohrung 69 des Schaltkolbens 63 wird von einer Querbohrung 79 durchsetzt, die diese Längsbohrung mit dem Fluidraum 77 verbindet.

Die Längsbohrung 69 hat kleineren Querschnitt als der Fluidraum 70 im Schaltkolben 63, jedoch größeren Querschnitt als die Längsbohrung 71 des Schaltkolbens. Die Längsbohrung 71 wird durch eine Rückschlagventilplatte 49a geschlossen, die wiederum unter der Kraft der Druckfeder 48a steht. Die Rückschlagventilplatte 49a liegt wiederum auf einer Erhöhung 51a auf, die von der Längsbohrung 71 durchsetzt wird. Die Stirnseite der Erhöhung 51 und/oder die Auflageseite der Rückschlagventilplatte 49a sind entsprechend dem vorigen Ausführungsbeispiel mit wenigstens einer Vertiefung und/oder Erhöhung versehen, durch die das Hydraulikmedium in noch zu beschreibender Weise bei unbeabsichtigtem Freigeben des Kupplungspedals 24 strömen kann.

Solange des Kupplungspedal 24 ordnungsgemäß betätigt ist, befindet sich der Schaltkolben 63 in der in Fig. 5 dargestellten Schaltstellung, in die er durch die Tellerfeder 64 gedrückt wird. Wird das Kupplungspedal 24 betätigt, strömt das Hydraulikmedium vom Geberzylinder 22 über den Anschluß 56a in die Fluidkammer 67. Von dort strömt es über die Durchströmöffnung 78, die Querbohrung 72 und die Längsbohrung 71 über das geöffnete Rückschlagventil 59a, 51a in die Fluidkammer 70. Von hier kann es ungehindert in die Längsbohrung 69 und die Querbohrung 79 zum Anschluß 58a des Nehmerzylinders 18 strömen. Außerdem strömt das Hydraulikmedium von der Durchströmöffnung 78 über die Längsnuten 73, 74 und den Drosselquerschnitt 76 in den Fluidraum 77, von dem aus das Hydraulikmedium ebenfalls zum Anschluß 58a des Nehmerzylinders 18 strömen kann. Auf diese Weise ist ein schnelles Trennen der Kupplung gewährleistet, da das Hydraulikmedium ungehindert fließen kann. Das Rückschlagventil 49a, 51a läßt das Hydraulikmedium ungehindert vom Anschluß 56a in der beschriebenen Weise zum Nehmeranschluß 58a strömen. Bei ordnungsgemäßer Betätigung des Kupplungspedals 24 herrscht an beiden Kopfenden des Schaltkolbens 63 weitgehend Druckgleichheit. Wird das Kupplungspedal 24 ordnungsgemäß freigegeben und demgemäß die Kupplung auch ordnungsgemäß geschlossen, ist das Druckgefälle über die beiden Drosselquerschnitte 76 so gering, daß der Schaltkolben 63 in der Schaltstellung gemäß Fig. 5 bleibt. Das Hydraulikmedium strömt dann vom Nehmeranschluß 58a über die Längsnuten 73, 74 in den Hydraulikraum 67 und von dort zum Geberanschluß 56a. Das Rückschlagventil 49a, 51a ist bei dieser Strömungsrichtung des Hydraulikmediums geschlossen. Lediglich die sehr geringen Drosselquerschnitte erlauben einen geringen Durchfluß an Hydraulikmedium, der sich aber bei ordnungsgemäßer Betätigung des Kupplungspedals 24 nicht bemerkbar macht.

Wird das Kupplungspedal 24 jedoch schlagartig freigegeben, wird das Druckgefälle über dem Drosselquerschnitt 76 so groß, daß durch einen entsprechenden Druckabfall auf der Seite der Tellerfeder 64 die Kraft auf der der Justierschraube 65 zugewandten Kolbenseite überwiegt. Der Druck des Hydraulikmediums im Fluidraum 77 wird somit so groß, daß der Schaltkolben 63 aus der Schaltstellung gemäß Fig. 5 mit hoher Schaltgeschwindigkeit gegen die Kraft der Tellerfeder 64 in Richtung auf die Justierschraube 66 verschoben wird. Während des gesamten Kupplungsvorganges bleibt der Schaltkolben 63 dann in dieser verschobenen Lage, weil die Kennlinie der Tellerfeder 64 in ihrem Arbeitsbereich abfällt.

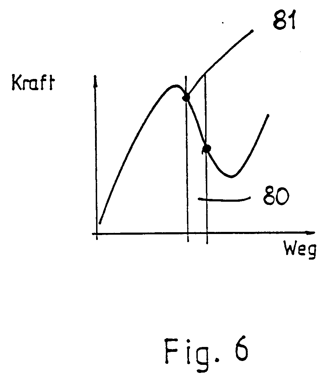

Fig. 6 zeigt die Kraft-Weg-Kennlinie einer Tellerfeder. In der Sicherheitseinrichtung 37a ist die Tellerfeder 64 so eingestellt, daß sich der Arbeitsbereich 80 im Kraft-Weg-Diagramm ergibt. Befindet sich der Schaltkolben 63 in der Schaltstellung gemäß Fig. 5, dann ergibt sich der Punkt 81 auf der Kraft-Weg-Kennlinie. Wird der Schaltkolben 63 in der beschriebenen Weise aus seiner Schaltstellung verschoben, nimmt die Kraft der Tellerfeder 64 entsprechend der Kraft-Weg-Kennline ab. Dadurch bleibt der Schaltkolben 63 unter dem wirkenden Hydraulikdruck in seiner verstellten Lage.

Ist der Schaltkolben 63 in der beschriebenen Weise verstellt, kann das vom Nehmerzylinder 18 kommende Hydraulikmedium nicht mehr durch die Drosselquerschnitte 76 strömen, da sie infolge des verschobenen Schaltkolbens 63 geschlossen sind. Das Hydraulikmedium kann dadurch nur noch über die Querbohrung 79 bzw. die Längsbohrung 69 in die Fluidkammer 70 des Schaltkolbens 63 strömen. Von dort kann es über die Drosselstelle, die infolge der Vertiefungen und/oder Erhöhungen in der Rückschlagventilplatte 49a und/oder der Erhöhung 51a gebildet sind, in die Längsbohrung 71, die Querbohrung 72 und die Durchströmöffnungen 78 in den Fluidraum 67 und von dort zum Geberanschluß 56a strömen. Auf diese Weise wird zuverlässig verhindert, daß bei freigegebenem Kupplungspedal 24 die Kupplung schlagartig geschlossen wird. Auf diese Weise werden Überlastungen und Beschädigungen von Teilen des Triebstranges einwandfrei vermieden. Infolge des verringerten Durchströmquerschnittes merkt der Fahrer durch das fehlende Gefühl im Kupplungsfuß, daß ein Bedienungsfehler beim Kuppeln erfolgt ist.

Bei dieser Ausführungsform arbeitet die Sicherheitseinrichtung 37a mit nur zwei Geschwindigkeiten. Über die Meßblende 76 (Drosselquerschnitt) wird die erste Geschwindigkeit bei vollem Druckgefälle infolge voll gespannter Tellerfeder 64 bei voll geöffneter Kupplung bestimmt. Die zweite Geschwindigkeit ergibt sich dadurch, daß der Schaltkolben 63 beim plötzlichem Freigeben des Kupplungspedals 24 aus seiner Schaltstellung verschoben wird und dadurch die Kupplungsgeschwindigkeit durch die Drosselstelle am Rückschlagventil 49a, 51a während des Einkuppelvorganges bestimmt wird.

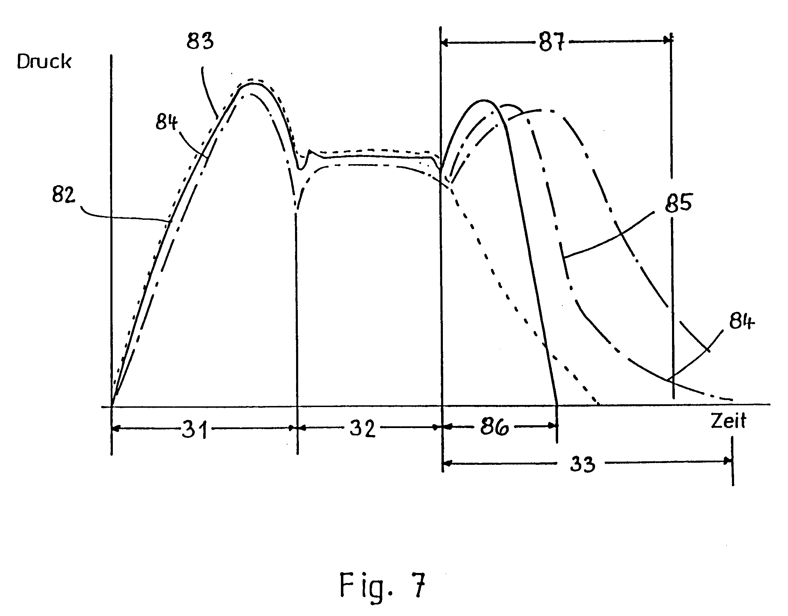

Fig. 7 zeigt das Druck-Zeit-Diagramm des Kupplungsvorganges. Mit der ausgezogenen Linie 82 wird der Druckverlauf ohne eingebaute Sicherheitseinrichtung 37a gekennzeichnet. Dieser Kennlinienverlauf entspricht dem Diagramm gemäß Fig. 3. Es sind wiederum die drei Bereiche 31 bis 33 erkennbar, die für das Öffnen der Kupplung (Bereich 31), für das Getrennthalten der Kupplung (Bereich 32) und für das Schließen der Kupplung (Bereich 33) maßgebend sind. In Fig. 7 ist der Fall eingezeichnet, daß das Kupplungspedal 24 schlagartig freigegeben wird. Der Druck im System nimmt dadurch mit der schnellstmöglichen Geschwindigkeit ab.

Mit der punktierten Linie 83 wird der Druck im Geberzylinder 22 bei eingebauter Sicherheitseinrichtung 37a und mit der strichpunktierten Kennlinie 84 der Druck im Nehmerzylinder 18 bei eingebauter Sicherheitseinrichtung gekennzeichnet. Die beiden Kennlinien 83 und 84 zeigen den Fall, daß das Kupplungspedal 24 schlagartig freigegeben wird. Infolge der Sicherheitseinrichtung 37a nimmt der Druck im System nicht schlagartig ab, sondern fällt allmählich.

Die strichpunktierte Kennlinie 85 zeigt den Druck im Nehmerzylinder 18, wenn die Kupplung ordnungsgemäß betätigt wird. In diesem Fall wird die Geschwindigkeit des Kupplungspedals 24 spürbar von der Drosselstelle 76 beeinflußt. Es wird nicht mehr vom Fuß bestimmt.

Das Diagramm gemäß Fig. 7 läßt erkennen, daß bei nicht ordnungsgemäßer Betätigung des Kupplungspedals 24 und ohne die Sicherheitseinrichtung 37a im Kennlinienfeld 33 lediglich der Bereich 86 zur Verfügung steht, der wesentlich kleiner ist als der Bereich 87, wenn die Sicherheitseinrichtung 37a eingebaut ist. Ein Vergleich der beiden Bereiche 86 und 87 zeigt, daß die Sicherheitseinrichtung 37a beim schlagartigen Loslassen den Kupplungspedals 24 dennoch die Schließschwindigkeit der Kupplung ausreichend verlangsamt, so daß eine Beschädigung von Triebstrangteilen ausgeschlossen ist.

## Patentansprüche

1. Kupplungsvorrichtung von Fahrzeugen, mit einem durch ein Kupplungspedal (24) betätigbaren Geberzylinder (22), der über eine Fluidleitung (20) mit einem Nehmerzylinder (18) verbunden ist, und mit einer in der Leitungsverbindung zwischen dem Geberzylinder (22) und dem Nehmerzylinder (18) angeordneten Sicherheitseinrichtung (37, die mindestens eine den Fluidstrom vom Nehmerzylinder (18) zum Geberzylinder (22) bei Überschreiten einer vorgegebenen Kupplungsgeschwindigkeit verringernde Drosselstelle (49, 51) aufweist, die parallel zu einer Meßblende (44) liegt, die bei Überschreiten eines vorgegebenen Differenzdruckes, gemessen vor und hinter der Meßblende (44), durch Verschieben eines Verschlußkörpers (41, 43) gegen die Kraft wenigstens einer Feder (42) die Leitungsverbindung vom Nehmer- zum Geberzylinder (18, 22) bis auf die Drosselstelle (49, 51) schließt,
dadurch gekennzeichnet, daß der Meßblende (44) zwei Druckschalter (55, 60) zugeordnet sind, die den Druck vor und hinter der Meßblende (44) abgreifen und bei Überschreiten des vorgegebenen Differenzdruckes ein Magnetventil (38, 41, 43) betätigen, durch das der Verschlußkörper (41, 43) in seine Schließstellung verstellbar ist.

2. Kupplungsvorrichtung nach Anspruch 1,
dadurch gekennzeichnet, daß die Drosselstelle (49, 51) durch mindestens eine Erhöhung und/oder Vertiefung in der Auflageseite eines Ventilteiles (49) und/oder in einer Auflageseite eines Sitzes (51) für das Ventilteil oder durch mindestens eine das Ventilteil (49) durchsetzende Öffnung gebildet ist.

3. Kupplungsvorrichtung nach Anspruch 1 oder 2,
dadurch gekennzeichnet, daß die Meßblende (44) eine verengte Durchlaßbohrung in einem Grundkörper (45) der Sicherheitseinrichtung (37) ist.

4. Kupplungsvorrichtung nach einem der Ansprüche 1 bis 3,
dadurch gekennzeichnet, daß der eine Druckschalter (55) ein Niederdruckschalter, der bei normaler Betätigung des Kupplungspedals (24) und damit bei entsprechend hohem Druck des Fluids den Stromkreis zum Magnetventil (38, 41, 43) öffnet, und der andere Druckschalter (60) ein Hochdruckschalter ist, der bei normaler Betätigung des Kupplungspedals (24) den Stromkreis schließt.

5. Kupplungsvorrichtung von Fahrzeugen, mit einem durch ein Kupplungspedal (24) betätigbaren Geberzylinder (22), der über eine Fluidleitung (20) mit einem Nehmerzylinder (18) verbunden ist, und mit einer in der Leitungsverbindung zwischen dem Geberzylinder (22) und dem Nehmerzylinder (18) angeordneten Sicherheitseinrichtung (37a), die mindestens eine den Fluidstrom vom Nehmerzylinder (18) zum Geberzylinder (22) bei Überschreiten einer vorgegebenen Kupplungsgeschwindigkeit verringernde Drosselstelle (49a, 51a) aufweist, die parallel zu einer Meßblende (76) liegt, die bei Überschreiten eines vorgegebenen Differenzdruckes, gemessen vor und hinter der Meßblende (76), durch Verschieben eines Verschlußkörpers (63) gegen die Kraft wenigstens einer Feder (64) die Leitungsverbindung vom Nehmer- zum Geberzylinder (18, 22) bis auf die Drosselstelle (49a, 51a) schließt,
dadurch gekennzeichnet, daß die Feder eine Tellerfeder (64) ist, durch die der Verschlußkörper (63) in seiner die Meßblende (76) offen haltenden Stellung gehalten ist, wobei die Tellerfeder (64) so eingestellt ist, daß ihr Arbeitsbereich (80) im abfallenden Teil ihrer Kraft-Weg-Kennlinie liegt.

6. Kupplungsvorrichtung nach Anspruch 5,
dadurch gekennzeichnet, daß die Drosselstelle (49a, 51a) im Verschlußkörper (63) vorgesehen ist.

7. Kupplungsvorrichtung nach Anspruch 5 oder 6,
dadurch gekennzeichnet, daß die beiden Kolbenseiten des Verschlußkörpers (63) unter dem Druck des Nehmerzylinders (18) bzw. des Geberzylinders (22) stehen.

8. Kupplungsvorrichtung nach einem der Ansprüche 5 bis 7,
dadurch gekennzeichnet, daß die Drosselstelle (49a, 51a) in Strömungsrichtung des Fluids vom Geberzylinder (22) zum Nehmerzylinder (18) parallel zur Meßblende (76) liegt.

9. Kupplungsvorrichtung nach einem der Ansprüche 5 bis 8,
dadurch gekennzeichnet, daß die Einbaulage des Verschlußkörpers (63) durch Justierschrauben (65, 66) einstellbar ist.

## Claims

1. A clutch device for vehicles having a master cylinder (22) operable by a clutch pedal (24) and connected via a fluid line (20) to a slave cylinder (18), and having a safety device (37) arranged in the line connection between the master cylinder (22) and the slave cylinder (18) and having at least one throttling point (49, 51) which reduces the flow of fluid from the slave cylinder (18) to the master cylinder (22) when a specified clutch speed is exceeded and which is situated parallel to a metering orifice which, when a specified differential pressure measured upstream and downstream of the metering orifice (44) is exceeded, closes the line connection from the slave to the master cylinder (18, 22) right up to the throttling point (49, 51) by displacing a closure member (41, 43) against the force of at least one spring (42), **characterised in that** two pressure switches (55, 60) are associated with the metering orifice (44) and determine the pressure upstream and downstream of the metering orifice (44) and, when the specified differential pressure is exceeded, operate a magnetic valve (38, 41, 43) which is used to move the closure member (41, 43) into its closing position.

2. A clutch device according to Claim 1, **characterised in that** the throttling point (49, 51) is formed by at least one rise and/or depression in the contact surface of a valve part (49) and/or in a contact surface of a seat (51) for the valve part or by at least one opening penetrating the valve part (49).

3. A clutch device according to Claim 1 or 2, **characterised in that** the metering orifice (44) is a narrow bore allowing flow in a body (45) of the safety device (37).

4. A clutch device according to one of Claims 1 to 3, **characterised in that** the one pressure switch (55) is a low pressure switch opening the circuit to the magnetic valve (38, 41, 43) during normal operation of the clutch pedal (24) and consequently when the pressure of the fluid is correspondingly high, and the other pressure switch (60) is a high pressure switch closing the circuit during normal operation of the clutch pedal (24).

5. A clutch device for vehicles having a master cylinder (22) operable by a clutch pedal (24) and connected via a fluid line (20) to a slave cylinder (18), and having a safety device (37a) arranged in the line connection between the master cylinder (2) and the slave cylinder (18) and having at least one throttling point (49a, 51a) which reduces the flow of fluid from the slave cylinder (18) to the master cylinder (22) when a specified clutch speed is exceeded and which is situated parallel to a metering orifice (76) which closes the line connection from the slave to the master cylinder (18, 22) right up to the throttle position (49a, 51a) by displacing a closure member (63) against the force of at least one spring (64) when a specified differential pressure, measured upstream and downstream of the metering orifice (76) is exceeded, **characterised in that** the spring is a disc spring (64) used to support the closure member (63) in its position holding the metering orifice (76) open, the disc spring (64) being so positioned that its operational area (80) is in the inclined part of its force path characteristic.

6. A clutch device according to Claim 5, **characterised in that** the throttling point (49a, 51a) is provided in the closure member (63).

7. A clutch device according to Claims 5 or 6, **characterised in that** the two piston surfaces of the closure member (63) are subject to the pressure of the slave cylinder (18) and the master cylinder (22) respectively.

8. A clutch device according to any one of Claims 5 to 7, **characterised in that** the throttling point (49a, 51a) is parallel to the metering orifice (76) in the direction of flow of the fluid from the master cylinder (22) to the slave cylinder (18).

9. A clutch device according to any one of Claims 5 to 8, **characterised in that** the fitting position of the closure member (63) is adjustable by adjusting screws (65, 66).

## Revendications

1. Dispositif d'embrayage pour des véhicules automobiles, comportant un cylindre émetteur (22) qui peut être actionné par une pédale d'embrayage (24) et qui est relié via une conduite de fluide (20) à un cylindre récepteur (18), et comportant un dispositif de sécurité (37) qui est agencé dans la liaison de conduite entre le cylindre émetteur (22) et le cylindre récepteur (18) et qui présente au moins un étranglement (49, 51) qui réduit l'écoulement du fluide depuis le cylindre récepteur (18) jusqu'au cylindre émetteur (22) lorsqu'une vitesse d'embrayage prédéterminée est dépassée, cet étranglement (49, 51) étant situé en parallèle à un diaphragme de mesure (44) qui ferme la liaison de conduite depuis le cylindre récepteur (18) jusqu'au cylindre émetteur (22), excepté l'étranglement (49, 51), par déplacement d'un corps de fermeture (41, 43) à l'encontre de la force d'au moins un ressort (42), lors du dépassement d'une pression différentielle prédéterminée, mesurée devant et derrière le diaphragme de mesure (44),
caractérisé en ce qu'au diaphragme de mesure (44) sont associés deux pressostats (55, 60) qui détectent la pression devant et derrière le diaphragme de mesure (44) et qui actionnement, lorsque la pression différentielle prédéterminée est dépassée, une électrovanne (38, 41, 43) au moyen de laquelle le corps de fermeture (41, 43) peut être déplacé dans la position de fermeture.

2. Dispositif d'embrayage selon la revendication 1, caractérisé en ce que l'étranglement (49, 51) est formé par au moins une élévation et/ou une cavité dans la face d'appui d'un obturateur de clapet (49) et/ou dans une face d'appui d'un siège (51) pour l'obturateur de clapet, ou par au moins une ouverture qui traverse l'obturateur de clapet (49).

3. Dispositif d'embrayage selon l'une ou l'autre des revendications 1 et 2, caractérisé en ce que le diaphragme de mesure (44) est un perçage de passage rétréci dans un corps de base (45) du dispositif de sécurité (37).

4. Dispositif d'embrayage selon l'une quelconque des revendications 1 à 3, caractérisé en ce que l'un des pressostats (55) est un interrupteur à basse pression qui ouvre le circuit électrique vers l'électrovanne (38, 41, 43) lors de l'actionnement normal de la pédale d'embrayage (24), et ainsi lorsque le fluide a une pression élevée correspondante, et en ce que l'autre pressostat (60) est un interrupteur à haute pression qui ferme le circuit électrique, lors de l'actionnement normal de la pédale d'embrayage (24).

5. Dispositif d'embrayage pour des véhicules automobiles, comportant un cylindre émetteur (22) qui peut être actionné par une pédale d'embrayage (24) et qui est relié via une conduite de fluide (20) à un cylindre récepteur (18), et comportant un dispositif de sécurité (37a) qui est agencé dans la liaison de conduite entre le cylindre émetteur (22) et le cylindre récepteur (18) et qui présente au moins un étranglement (49a, 51a) qui réduit l'écoulement du fluide depuis le cylindre récepteur (18) jusqu'au cylindre émetteur (22) lorsqu'une vitesse d'embrayage prédéterminée est dépassée, cet étranglement (49a, 51a) étant situé en parallèle à un diaphragme de mesure (76) qui ferme la liaison de conduite depuis le cylindre récepteur (18) jusqu'au cylindre émetteur (22), excepté l'étranglement (49a, 51a), par déplacement d'un corps de fermeture (63) à l'encontre de la force d'au moins un ressort (64), lors du dépassement d'une pression différentielle prédéterminée, mesurée devant et derrière le diaphragme de mesure (76),
caractérisé en ce que le ressort est un ressort à disque (64) au moyen duquel le corps de fermeture (63) est maintenu dans sa position qui tient ouvert le diaphragme de mesure (76), et en ce que le ressort à disque (64) est réglé de telle sorte que sa plage de travail (80) se trouve dans la partie descendante de sa courbe caractéristique force-course.

6. Dispositif d'embrayage selon la revendication 5, caractérisé en ce que l'étranglement (49a, 51a) est prévu dans le corps de fermeture (63).

7. Dispositif d'embrayage selon l'une ou l'autre des revendications 5 et 6, caractérisé en ce que les deux côtés du piston du corps de fermeture (63) sont soumis respectivement à la pression du cylindre récepteur (18) ou du cylindre émetteur (22).

8. Dispositif d'embrayage selon l'une quelconque des revendications 5 à 7, caractérisé en ce que l'étranglement (49a, 51a) se trouve en direction d'écoulement du fluide depuis le cylindre émetteur (22) jusqu'au cylindre récepteur (18), parallèlement au diaphragme de mesure (76).

9. Dispositif d'embrayage selon l'une quelconque des revendications 5 à 8, caractérisé en ce que la position de montage du corps de fermeture (63) est réglable par des vis d'ajustage (65, 66).
